# EUROPÄISCHE PATENTSCHRIFT

(11) **EP 2 195 546 B1**
(45) Veröffentlichungstag und Bekanntmachung des Hinweises auf die Patenterteilung: **28.12.2011**
(21) Anmeldenummer: 08801237.2
(22) Anmeldetag: 27.08.2008
(51) Int. Cl.: F16C 19/52, F16C 33/62, F16C 35/06

(54) **LAGERRING**
BEARING RING
BAGUE DE PALIER

(30) Priorität: 06.09.2007 DE 102007042372
(43) Veröffentlichungstag der Anmeldung: 16.06.2010
(73) Patentinhaber: Schaeffler Technologies GmbH & Co. KG, 91074 Herzogenaurach (DE)
(72) Erfinder: PRÖSCHEL, Christian, 97072 Würzburg (DE)
(86) Internationale Anmeldenummer: PCT/DE2008/001429
(87) Internationale Veröffentlichungsnummer: WO 2009/030199

(56) Entgegenhaltungen:
- GB-A- 1 360 438
- US-A- 3 294 459
- US-A1- 2001 033 706
- US-A1- 2002 085 773

## Beschreibung

Die Erfindung betrifft eine Lageranordnung nach dem Oberbegriff des Patentanspruchs 1. Eine solche Lageranordnung ist beispielsweise aus der GB 735,625 A bekannt und umfasst, als Teil eines Radlagers eines Fluggerätes, zwei in O-Anordnung montierte Wälzlager.

Die Erfindung liegt auf dem Gebiet der Wälzlager und Gleitlager, bei denen ein äußerer Lagerring gegenüber einem inneren Lagerring relativ drehbeweglich ist. Dabei können zwischen den Lagerringen Wälzkörper (Wälzlager) oder Gleitflächen (Gleitlager) vorgesehen sein. Derartige Lager finden vielfältige Anwendung, wobei häufig zumindest einer der Lagerringe mittels Passung, z.B. einer Presspassung, kraftschlüssig mit einem Maschinenelement verbunden bzw. auf diesem fixiert ist. Auf diese Weise kann ein Maschinenelement drehbeweglich gelagert werden.

Der Begriff Maschinenelement ist im Rahmen der vorliegenden Erfindung weit zu verstehen und umfasst beispielsweise Wellen, Achsen oder Achszapfen.

Die Festlegung eines Lagerringes mittels Passung ist ein verbreitetes und fertigungstechnisch auch deshalb bevorzugtes Mittel, weil sich diese Verbindung relativ einfach herstellen und montieren lässt. Allerdings ist die Qualität, insbesondere die Langzeitstabilität und damit die Zuverlässigkeit einer Lagerung ganz erheblich von dem zuverlässigen Sitz der mittels Passung verbundenen Teile abhängig. Unerwünscht ist dabei eine Relativbewegung oder ein sogenanntes Arbeiten der Passungspartner relativ zueinander. Dies lässt sich in der Praxis allerdings nicht in jedem Fall ausschließen.

Bereits kleinste Relativbewegungen der Passungspartner können zu Korrosionsphänomenen führen, die auch als Passungsrost oder Reiboxydation bezeichnet werden. Unter Passungsrost bzw. Reiboxydation ist eine Art Schwingungsverschleiß im Bereich der Kontakt- und Passflächen zu verstehen. Im Betrieb auftretende Schwingungen verursachen Vibrationen, die ungünstigstenfalls zum Schlupf der Verbindungspartner - also einer Mikro-Relativbewegung des Lagerringes gegenüber dem Maschinenelement - führen. Die dabei auftretende mechanische Oberflächenbelastung führt zu einer Zerrüttung und Aktivierung der Werkstoffoberflächen. Dadurch kommt es zu chemischen Reaktionen mit dem Umgebungsmedium, insbesondere zur Oxydation. Die durch Kontakt mit dem Umgebungsmedium (Luft, Schmiermittel, Wasser oder ähnliches) eintretende Oxydation führt meist zu schwärzlichem Rost, der mithin als Passungsrost bezeichnet wird.

Grundsätzlich ist denkbar, diesem Phänomen durch Verklebung oder Dichtung des Passungsspaltes gegenüber der Umgebung entgegenzuwirken. Dies erhöht den Fertigungsaufwand und kann dennoch nicht in allen Belastungsfällen und/oder bei aggressiven Einsatzumgebungen nicht immer einen zuverlässigen Schutz garantieren.

Vor diesem Hintergrund besteht die Aufgabe der Erfindung darin, bei einem Lagerring einen zuverlässigen, schon bei der Montage wirksamen und wartungsfreien Schutz gegen Passungsrost anzugeben.

Diese Aufgabe wird erfindungsgemäß durch einen Lagerring mit den Merk*malen des Patentanspruchs 1 gelöst.

Demgemäß ist die Wandung des Lagerringes, zumindest in den Bereichen, die im montierten Zustand über eine Passung mit einem Maschinenelement in Kontakt sind, mit einer passungsrost-resistenten Schicht versehen. Besonders geeignet sind dazu metallische oder metallhaltige Schichten, die durch chemische und/oder elektro-chemische Abscheidungsverfahren aufgebracht werden können. Es ist auch denkbar Kunststoff- oder Kohlenstoffschichten auf die Wandung in dauerhaftem Verbund aufzubringen.

Damit stellt die Erfindung in überraschend einfacher Weise einen zuverlässigen Schutz gegen Passungsrost zur Verfügung, der vergleichsweise einfach schon bei der Fertigung des Lagerringes appliziert ist und bei bzw. nach der Montage des Lagerringes auf dem oder in dem korrespondierenden Maschinenelement keine zusätzlichen Fertigungsschritte - wie z.B. die zuvor beschriebenen Dichtungsmaßnahmen - erfordert.

Ein weiterer Vorteil der Erfindung besteht darin, dass die passungsrost-resistente Schicht auch bei einer Demontage und etwaiger Neumontage des Lagerringes erhalten bleibt und ihre schützende Wirkung erneut entfalten kann. Dabei besteht zusätzlich der Vorteil, dass ein Verklemmen der Passungspartner durch Passungsrost bei der Demontage zuverlässig verhindert ist.

Ein besonders zuverlässiger und fertigungstechnisch bevorzugter Schutz lässt sich dadurch erreichen, dass nach vorteilhaften Ausgestaltungen der Erfindung die zu beschichtende Wandung des Lagerringes mit Kupfer, mit Cadmium, mit Silber oder mit Chrom beschichtet ist.

Eine weitere vorteilhafte Ausführung der Erfindung sieht vor, dass Wandung des Lagerringes phosphatiert ist.

Nach einer weiteren vorteilhaften Ausgestaltung der Erfindung ist die Wandung des Lagerringes mit einem Kunststoff, besonders bevorzugt mit Tef-Ion®, beschichtet.

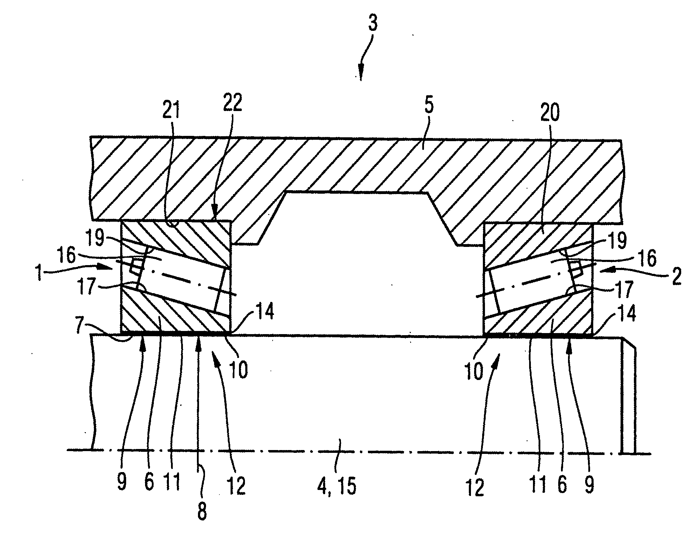

Ein Ausführungsbeispiel der Erfindung und weitere Vorteile der Erfindung werden nachfolgend anhand der einzigen Figur der Zeichnung erläutert.

Die Figur zeigt als Ausführungsbeispiel zwei in so genannter O-Anordnung montierte Wälzlager 1, 2 einer Lageranordnung 3. Mittels der Lageranordnung ist auf einem Achszapfen 4 ein Lageraußenringgehäuse 5 drehbar gelagert. Im Verlauf der weiteren Beschreibung wird auf das Wälzlager 1 Bezug genommen, wobei das Wälzlager 2 in entsprechender Weise ausgebildet ist.

Das Wälzlager 1 umfasst einen Lagerinnenring 6 mit einer Bohrung 7. Der Innendurchmesser 8 der Bohrung ist von einer Wandung 9 begrenzt. Auf die Wandung 9 ist eine passungsrost-resistente Schicht 10 aufgetragen. Diese Schicht 10 kann beispielsweise aus Kupfer 11 bestehen. Die Schicht 10 ist zumindest in den Bereichen 12 der Wandung aufgebracht, die im dargestellten montierten Zustand über eine Passung 14 mit einem Maschinenelement 15 - hier nämlich mit dem Achszapfen 4 - verbunden bzw. auf diesem drehfest fixiert sind.

Das Wälzlager 1 umfasst in an sich bekannter und nicht im Einzelnen dargestellter Weise eine Vielzahl von Wälzkörpern 16, die auf der Lauffläche 17 des Lagerinnenringes 6 abrollen. Außenseitig laufen die Wälzkörper 16 auf der Lauffläche 19 eines Lageraußenringes 20. Der Lageraußenring ist in einer Bohrung 21 des Lageraußenringgehäuses 5 aufgenommen.

Grundsätzlich kann auch der Lageraußenring 20 im Verbindungsbereich 22 mit der Bohrung 21 mit einer entsprechenden passungs-resistenten Schicht versehen sein, insbesondere wenn die Befürchtung besteht, dass durch betriebsgemäße Vibrationen oder Schwingungen es auch hier zu einer Relativbewegung des Lageraußenringes 20 gegenüber dem 5 kommt. Somit kann auch zwischen dem Lageraußenringgehäuse und dem Lageraußenring 20 Passungsrost vermieden werden.

Die erfindungsgemäße Ausgestaltung des Lagerringes mit einer Beschichtung zum Schutz vor Passungsrost ist besonders vorteilhaft beim Einsatz der Lageranordnung 3 bei Radlagerungen von Fluggeräten, da diese ganz besonders extremen und passungsrostbegünstigenden Betriebssituationen ausgesetzt sind. Dabei wirkt sich besonders günstig der mit der Erfindung erzielbare Vorteil der Gewichtsreduzierung und der Kostenreduzierung bei der Herstellung der Lageranordnung aus.

Der mit der erfindungsgemäßen Gestaltung der Lagerringe mögliche Verzicht auf die eingangs geschilderten möglichen anderweitigen Schutzmaßnahmen gegen Passungsrost wirkt sich positiv in einem reduzierten Wartungsaufwand und damit reduzierten Logistikkosten für den Anwender aus. Dabei besteht zudem der demontage-technische Vorteil, dass ein Verklemmen der Passungspartner bei der Demontage zuverlässig verhindert ist.

### Bezugszeichenliste

- 1: Wälzlager
- 2: Wälzlager
- 3: Lageranordnung
- 4: Achszapfen
- 5: Lageraußenringgehäuse
- 6: Lagerinnenring
- 7: Bohrung
- 8: Innendurchmesser
- 9: Wandung
- 10: passungsrost-resistente Schicht
- 11: Kupfer
- 12: Bereich
- 14: Passung
- 15: Maschinenelement
- 16: Wälzkörper
- 17: Lauffläche des Innenringes
- 19: Lauffläche des Lageraußenringes
- 20: Lageraußenring
- 21: Bohrung
- 22: Verbindungsbereich

## Patentansprüche

1. Lageranordnung (3) für ein Radlager eines Fluggeräts, umfassend zwei in O-Anordnung montierte Wälzlager (1, 2), **dadurch gekennzeichnet, dass** jedes Wälzlager (1, 2) einen Lagerring (6, 20) mit einer Wandung (9) aufweist, die zumindest in den Bereichen (12), die im montierten Zustand über eine Passung (14) mit einem Maschinenelement (15) in Kontakt sind, mit einer passungsrost-resistenten Schicht (10) aus Kupfer versehen ist.

## Claims

1. Bearing arrangement (3) for a wheel bearing of an aircraft, comprising two anti-friction bearings (1, 2) which are mounted in an O-arrangement, **characterized in that** each anti-friction bearing (1, 2) has a bearing ring (6, 20) with a wall (9) which is provided with a layer (10) of copper which is resistant to frictional corrosion at least in the regions (12) which, in the mounted state, are in contact with a machine element (15) via a locating fit (14).

## Revendications

1. Agencement de palier (3) pour un palier de roue d'un aéronef, comprenant deux paliers à roulement (1, 2) montés suivant un agencement en O, **caractérisé en ce que** chaque palier à roulement (1, 2) présente une bague de palier (6, 20) avec une paroi (9), qui, au moins dans les régions (12) qui sont en contact avec un élément de machine (15) dans l'état monté par le biais d'un ajustement (14), est pourvue d'une couche (10) de cuivre résistant à la corrosion de contact.
